# NEUE EUROPÄISCHE PATENTSCHRIFT

(11) **EP 1 277 634 B2**
(45) Veröffentlichungstag und Bekanntmachung des Hinweises auf die Entscheidung über den Einspruch: **27.08.2008**
(45) Hinweis auf die Patenterteilung: 22.12.2004
(21) Anmeldenummer: 02009876.0
(22) Anmeldetag: 02.05.2002
(51) Int. Cl.: B60T 8/00

(54) **Antiblockiersystem**
Antilock braking system
Système de freinage antiblocage

(30) Priorität: 20.07.2001 DE 10135600
(43) Veröffentlichungstag der Anmeldung: 22.01.2003
(73) Patentinhaber: WABCO GmbH, 30453 Hannover (DE)
(72) Erfinder: Ruhnau, Gerhard, 31535 Neustadt (DE); Stanusch, Gerald, 31171 Harsum (DE); Knosmann, Michael, 30455 Hannover (DE)
(74) Vertreter: Schrödter, Manfred

(56) Entgegenhaltungen:
- DE-A- 3 738 915
- DE-C- 4 410 937
- US-B1- 6 256 569

## Beschreibung

Die Erfindung bezieht sich auf ein Antiblockiersystem gemäß dem Oberbegriff des Patentanspruchs 1.

Derartige Antiblockiersysteme dienen bekanntlich dazu, insbesondere bei Bremsungen auf glatten Straßenoberflächen ein Blockieren einzelner Räder zu verhindern und damit den Bremsweg bei erhaltener Seitenführung zu verkürzen. Bei Antiblockiersystemen für Nutzfahrzeuge sind eine Vielzahl von möglichen Systemen zu unterscheiden. So können Nutzfahrzeuge beispielsweise ein, zwei, drei oder noch mehr Achsen aufweisen. Jeder Achse sind normalerweise zwei Räder zugeordnet. Diese Räder können sensiert, d. h. mit Raddrehzahlsensoren ausgestattet, oder nicht sensiert sein.

Zur Bremsung wird normalerweise bei Nutzfahrzeugen ein Bremsmedium, z.B. Druckluft, in Bremszylinder eingesteuert und hierdurch die jeweilige Radbremse betätigt. Bei mit ABS ausgerüsteten Bremsanlagen sind dabei in die Druckluftleitungen sogenannte Bremsdruck-Modulatoren (Magnetventile) eingesetzt, die von einer ABS-Elektronik betätigbar sind und durch welche der Bremsdruck abgesenkt, gehalten oder gesteigert werden kann.

Hierzu enthalten die Modulatoren je ein Einlaß-und ein Auslaßventil. Dabei ist es möglich, jeder Radbremse einen eigenen Modulator zuzuordnen, oder aber pro Achse nur einen gemeinsamen Modulator vorzusehen. Der gemeinsame Modulator steuert dann für die beiden Räder einer Achse den gleichen Bremsdruck ein. Hierzu sind dem Fachmann verschiedene Regelstrategien bekannt, wie z. B. die select-low-Regelung (SL), die select-high-Regelung (SH), die modifizierte Achsregelung (MAR) (DE 37 33 801) oder die variable Achsregelung (VAR) (DE 197 23 323).

Für Nutzfahrzeuge mit zwei Achsen, einer (gelenkten) Vorderachse und einer Hinterachse sind zwei Blockierschutz-Systeme besonders geläufig.

Zum einen ist dies ein System, welches über vier Raddrehzahlsensoren und vier Bremsdruck-Modulatoren verfügt. Dieses System ist auch als Individualregelung (IR) bekannt, da hiermit alle Räder des Fahrzeugs individuell geregelt werden können. Das System wird auch als 4S/4M-System bezeichnet, entsprechend der Anzahl der Raddrehzahl-Sensoren (S) und der Bremsdruck-Modulatoren (M).

Das zweite übliche System für zweiachsige Fahrzeuge besitzt ebenfalls vier Sensoren, jedoch nur drei Modulatoren. Dieses System wird deshalb als 4S/3M-System bezeichnet. Dabei ist eine Achse mit zwei Modulatoren versehen, während die Bremszylinder der anderen Achse gemeinsam über einen sogenannten Achsmodulator versorgt werden. Diese gemeinsam versorgte Achse kann entweder die Vorder- oder die Hinterachse des Fahrzeugs sein (WABCO-Prospekt ABS/ASR "D"-"CAB"-Version 8/99, S. 9).

Ein drittes, weniger gebräuchliches System für zweiachsige Nutzfahrzeuge besitzt vier Sensoren, aber nur zwei Modulatoren (4S/2M). Hier wird also jede Achse von einem Achsmodulator gemeinsam versorgt.

Für die drei o. g. Systeme waren bislang verschiedene Ausführungen von elektronischen ABS-Steuergeräten notwendig bzw. bekannt, und zwar für das 4S/4M-System eine Elektronik mit vier Regelkanälen, und für das 4S/3M-System eine Elektronik mit drei Regelkanälen, und für das 4S/2M-System eine Elektronik mit zwei Regelkanälen. Dabei wird als Regelkanal die Wirkungskette zwischen Raddrehzahlsensor und Ausgangsverstärker bzw. Endstufe für den Modulator dieses Rades verstanden. Die bekannten Ausführungen sind äusserlich gleichartig aufgebaut, mit dem einzigen Unterschied, daß bei der 4S/3M-Version und der 4S/2M-Version intern die jeweils nicht benötigten Endstufen nicht verbaut sind.

Weitere Varianten der ABS-Elektronik ergeben sich dadurch, daß der einzelne Achsmodulator an der Vorderoder Hinterachse angeordnet sein kann. Die o.g. speziellen Regelphilosophien MAR bzw. VAR vervielfachen die Zahl der möglichen Varianten der ABS-Elektronik weiter.

Durch die genannten vielfältigen Varianten ergeben sich bei der Fabrikation der ABS-Elektroniken getrennte Teilenummern und dadurch höhere Kosten durch Fabrikation und Lagerhaltung, insbesondere wenn einzelne Varianten nur in kleinen Stückzahlen verkauft werden.

Ein weiteres Problem, das z.B. bei der bekannten 4S/3M-ABS-Elektronik auftritt, ist die Sicherheit bzw. Fehlererkennung bei einer fälschlichen Montage einer solchen 4S/3M-ABS-Elektronik in einem Fahrzeug, das für ein 4S/4M-ABS mit vier Modulatoren bestückt ist.

Wird ein solches 4S/4M-Fahrzeug über den zugehörigen Kabelbaum an die 4S/3M-Elektronik angeschlossen, so erkennt diese den überzähligen Modulator und gibt eine Fehlermeldung ab. Die Steckverbindung zwischen Kabelbaum und ABS-Elektronik ist für beide Systeme gleich.

Ist jedoch in diesem Fall der Anschlußstecker für den vierten Modulator nicht gesteckt, würde die 4S/3M-Elektronik fälschlicherweise ein gültiges System erkennen, und für den zweiten Modulator der Achse bei einer geregelten Bremsung ungeeignete Regelsignale (SL) liefern.

Der Erfindung liegt die Aufgabe zugrunde, für alle oben erwähnten ABS-Varianten nur noch eine gemeinsame, einheitlich aufgebaute Elektronik vorzusehen. Diese soll also sowohl für ein 4-Modulator-System als auch für ein 3-Modulator-System und 2-Modulator-System verwendet werden können. Weiter soll die Sicherheit des ABS gegen Falschmontage bzw. Vertauschung von ABS-Elektroniken erhöht werden.

Diese Aufgabe wird durch die im Patentanspruch 1 enthaltene Erfindung gelöst. Die Unteransprüche enthalten zweckmäßige Weiterbildungen.

Durch den einheitlich vierkanaligen Aufbau besteht das erfindungsgemäße ABS zwar aus mehr Bauteilen (insbesondere Endstufen) als die bekannten 4S/3M-oder 4S/2M-Spezialausführungen mit nur drei oder zwei Kanälen bzw. Endstufen. Die Kosten für das erfindungsgemäße ABS sinken jedoch insgesamt dadurch, daß höhere Stückzahlen von nur einer Elektronik mit einheitlicher Teilenummer gebaut werden können.

Die Erfindung wird im folgenden anhand einer Zeichnung näher erläutert. Diese zeigt in
- Fig. 1: eine schematische Darstellung des pneumatischen und elektrischen Teiles eines ABS für eine Achse (2S/1M).
- Fig. 2: ein vereinfachtes Blockschaltbild des elektronischen Teils eines vierkanaligen ABS mit Modulatoren.
- Fig. 3: ein elektrisches Blockschaltbild mit Endstufen und Modulatoren eines dreikanaligen ABS.
- Fig. 4: ein elektrisches Blockschaltbild der Endstufen und Modulatoren eines ABS (4S/3M) gemäß der Erfindung (VAR).
- Fig. 5: ein weiteres elektrisches Blockschaltbild der Endstufen und Modulatoren eines ABS (4S/3M) gemäß der Erfindung (MAR).

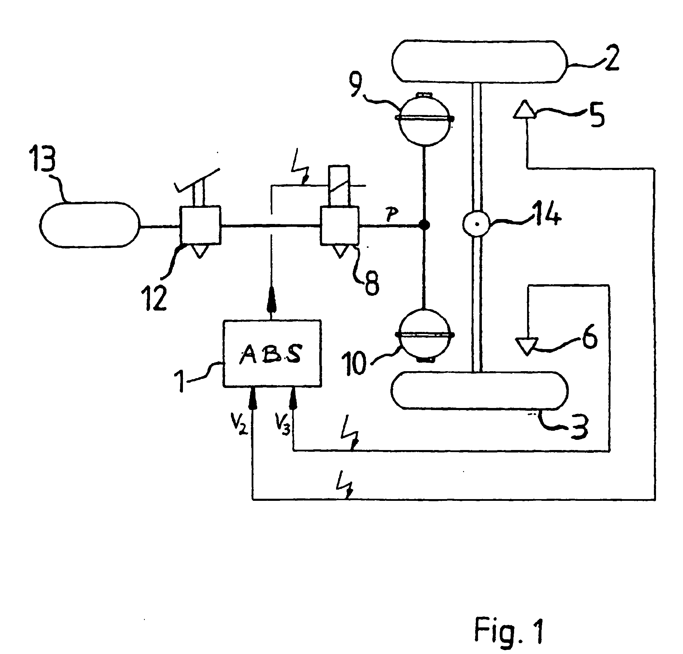

Die Fig. 1 zeigt in schematischer Darstellung ein 2S/1M-Antiblockiersystem für eine Achse (14) eines Nutzfahrzeuges. Dabei ist die (nicht dargestellte) zweite Achse des Fahrzeuges in der Regel mit einem 2S/2M-System ausgerüstet, womit das Gesamtfahrzeug ein 4S/3M-System aufweist. Es ist aber auch möglich, daß die zweite Achse ebenfalls mit einem 2S/1M-System ausgerüstet ist.

Die zur Achse (14) gehörenden Räder (2, 3) sind mit Raddrehzahlsensoren (5, 6) ausgerüstet. Diese geben ihre Geschwindigkeitssignale (V2, V3) an eine ABS-Elektronik (1) ab. Die Elektronik (1) steuert einen Modulator (8) an, durch welchen der Bremsdruck (P) in den beiden Bremszylindern (9, 10) bei Bedarf gesteigert, gesenkt oder gehalten werden kann. Das Bremsmedium, meist Druckluft, ist in einem Vorratsbehälter (13) eingeschlossen und kann vom Fahrer über ein Bremsventil (12) auf die Bremszylinder (9, 10) gegeben werden. Als Bremsmedium kann auch Hydraulikflüssigkeit verwendet werden. Es können auch elektromotorisch zugespannte Bremsen eingesetzt werden.

Die grundsätzliche Arbeitsweise der ABS-Elektronik (1) ist für sich bekannt und wird deshalb hier nicht näher erläutert.

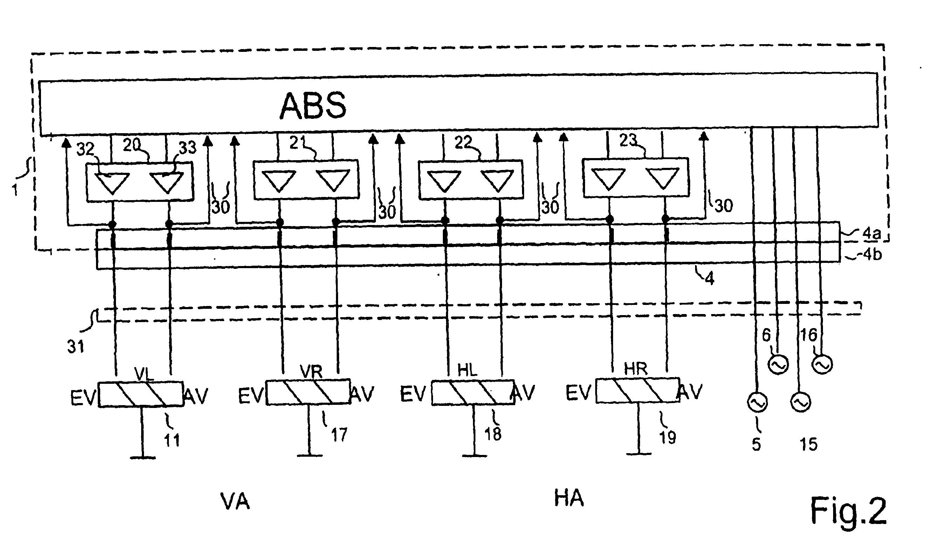

In der Fig. 2 ist der elektronische Teil eines vierkanaligen ABS nach dem Stand der Technik genauer dargestellt. Das ABS hat vier Raddrehzahl-Sensoren und vier Modulatoren (4S/4M) und weist intern vier Endstufen (20 bis 23) auf. Diese enthalten jeweils zwei Verstärker (32,33) für das Einlaßventil (EV) und das Auslaßventil (AV) der angeschlossenen Modulatoren (11 bis 19). Die Ausgangsleitungen der Verstärker sind über Rückführungsleitungen (30) mit dem Elektronikteil des ABS verbunden, wodurch der Status der Ausgangsleitungen abgefühlt werden kann. Derartige Rückführungsleitungen sind z.B. aus der DE 3928651 bekannt. Damit kann die ABS-Elektronik (1) erkennen, ob ein falsches Fahrzeug-System, z.B. mit nur drei Modulatoren (4S/3M), angeschlossen ist. Dies wird dem Fahrer durch eine Warnlampe (nicht dargestellt) gemeldet. Die Rückführungsleitungen dienen weiter auch zur Fehlerkontrolle von Endstufen und Lasten.

Dem ABS werden weiter Signale von vier Raddrehzahlsensoren (5, 6, 15, 16) zugeführt.

Alle Anschlußleitungen zum ABS laufen über eine Steckverbindung (4), wobei eine Buchse (4a) fest am Gehäuse (gestrichelt dargestellt) der ABS-Elektronik (1) befestigt ist, und ein Stecker (4b) mit einem Kabelbaum (31) verbunden ist. Die Steckverbindung ist für alle Varianten des ABS einheitlich gebaut. Es können auch mehrere Einzelstecker verwendet werden. An den Kabelbaum (31) sind am anderen Ende die Modulatoren (11 bis 19) und die Raddrehzahlsensoren (5, 6, 15, 16) angeschlossen. Dabei erfolgt der Anschluß des Kabelbaums an die Modulatoren und Sensoren ebenfalls über (nicht dargestellte) Steckverbindungen.

Die Modulatoren (11,17,18,19) enthalten in bekannter Weise je ein Einlaßventil (EV) und ein Auslaßventil (AV), welche elektromagnetisch betätigt werden. Die Modulatoren sind in der Nähe der Räder angeordnet, und zwar für die Vorderachse (VA) vorne links (VL) und vorne rechts (VR), und für die Hinterachse (HA) hinten links (HL) und hinten rechts (HR). Die Modulatoren (11,17) sind also für die Vorderachse zuständig, und die Modulatoren (18,19) für die Hinterachse. Die Betätigungsspulen der Modulatoren für die Einlaß/Auslaßventile (EV/AV) werden von den Verstärkern (32,33) bestromt. Die Modulatoren sind mit ihren dritten Anschlüssen gemeinsam an Masse gelegt. Dabei kann der Masseanschluß direkt am Einbauort realisiert werden, oder es kann über den Kabelbaum (31) oder einen weiteren Kabelbaum ein Anschluß an einem gemeinsamen Massepunkt (nicht dargestellt) realisiert werden.

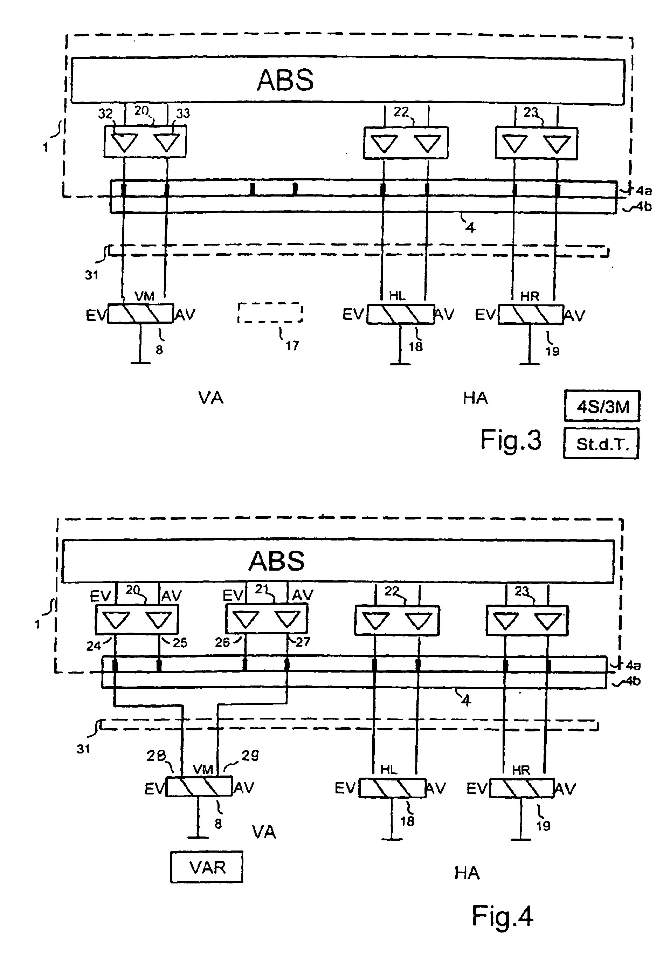

In der Fig. 3 ist vereinfacht ein 4S/3M-ABS nach dem Stand der Technik dargestellt. Dabei entspricht der elektronische Teil dem der Fig. 2, allerdings ist hier die Endstufe für den fehlenden Modulator (17) (gestrichelt dargestellt) nicht verbaut. Die gemeinsame Regelung (z.B. nach SL) der Vorderachse (VA) wird hier durch den Achsmodulator (8) durchgeführt (vergl. Fig. 1). Die Raddrehzahl-Sensoren und die Rückführungs-Leitungen sind der Einfachheit halber nicht dargestellt.

Die Steckverbindung (4a,4b) für den anzuschließenden Kabelbaum ist identisch mit der Steckverbindung aus Fig. 2. Die weiteren Modulatoren (18, 19) sind für die Einzel-Regelung der Räder der Hinterachse (HA) vorgesehen. Der gemeinsame Achsmodulator (8) ist hier an die Endstufe (20) angeschlossen, welche bei der Steckerbelegung nach Fig. 2 für ein 4S/4M-System für die Regelung des Rades (VL) der Vorderachse (VA) vorgesehen wäre. Im Fall der Fig. 3 (4S/3M-System) wird die Endstufe (20) hier jedoch vom ABS mit Regelsignalen angesteuert, die gemäß einer der oben beschriebenen Regel-Philosophien (SL, SH, MAR, VAR) zur gemeinsamen Regelung der Räder einer Achse geeignet sind.

Der Kabelbaum (31) in der Fig. 3 ist speziell für das hier vorliegende 4S/3M-ABS ausgebildet und enthält deshalb nur drei Modulator-Ansteuerleitungen für die Modulatoren (8, 18, 19). Die ABS-Elektronik (1) erkennt das in Fig. 3 angeschlossene System (die Raddrehzahlsensoren sind der Einfachheit halber nicht dargestellt) als gültiges System an.

Es kann nun vorkommen, daß in einer Reparaturwerkstatt beim Austausch einer defekten ABS-Elektronik eine 4S/3M-Elektronik (1) gemäß Fig. 3 fälschlicherweise in ein Fahrzeug eingebaut wird, das mit Sensoren und Modulatoren für ein 4S/4M-System ausgerüstet ist (vergl. Fig. 2). Ein derartiges System mit zugehörigem vierkanaligem Kabelbaum (31) und viertem Modulator (17) würde dann mit dem (für alle Systeme einheitlichen) Stecker (4b) an die 4S/3M-Elektronik der Fig. 3 angeschlossen. In einem solchen Fall bemerkt jedoch die 4S/3M-Elektronik (1) durch eine (nicht dargestellte) interne Schaltungsanordnung bzw. Logik den überzähligen Modulator (17) und steuert eine ABS-Warnlampe (nicht dargestellt) zur Warnung des Fahrers an.

Sollte jedoch darüberhinaus die Steckverbindung vom Kabelbaum (31) zum vierten Modulator (17) nicht gesteckt sein, würde die Elektronik (1) das System (fälschlicherweise) als gültiges System anerkennen. Hierdurch werden bei einer geregelten Bremsung die eigentlich für den Achsmodulator (8) vorgesehenen gemeinsamen Regelsignale fälschlicherweise auf den Radmodulator (11) (siehe Fig. 2) geleitet. Damit ist natürlich eine ordnungsgemäße Regelung des 4S/4M-Fahrzeuges nicht möglich. Eine Warnung des Fahrers über diesen gefährlichen Zustand unterbleibt aber.

In der Fig. 4 ist ein Antiblockiersystem (ABS) gemäß der Erfindung dargestellt. Die ABS-Elektronik des Systems ist sowohl für 4S/4M-als auch für 4S/3M- und 4S/2M-Fahrzeuge geeignet.

Die ABS-Elektronik (1) ist hier mit einem 4S/3M-Fahrzeug verbunden. Bei dem dargestellten ABS ist die oben beschriebene Möglichkeit der fälschlichen Erkennung eines 4S/4M-Systems als gültiges Systems beseitigt.

Das erfindungsgemäße System nach Fig. 4 hat eine Elektronik (1), bei der im Gegensatz zur Fig. 3 (Stand der Technik) alle Endstufen (20 bis 23) verbaut sind. Weiterhin hat das System der Fig. 4 einen speziellen 4S/3M-Kabelbaum (31), bei welchem der Stecker (4b) so verdrahtet ist, daß der Achsmodulator (8) mit seinem elektrischen Einlaßventil-Anschluß (28) wie in der Fig. 3 an den Einlaßventilausgang (24) der Endstufe (20) des ersten Kanals für die Achse (14) (Vorderachse VA) angeschlossen ist. Dagegen ist aber der Achsmodulator (8) mit seinem elektrischen Auslaßventil-Anschluß (29) an den Auslaßventilausgang (27) der nun verbauten Endstufe (21) des zweiten Kanals für die Achse (14) angeschlossen. Der Auslaßventil-Ausgang (25) der Endstufe (20) und der Einlaßventil-Ausgang (26) der Endstufe (21) bleiben frei.

Die Belegung des Steckers (4b) wird durch die Rückführungsleitungen (30) (vergl. Fig. 2) der ABS-Elektronik (1) rückgemeldet und führt dazu, daß die Elektronik (1) intern so programmiert wird, daß das Auslaßventil (29) des Achsmodulators (8) nicht wie beim Stand der Technik durch die Endstufe (20) angesteuert wird, sondern durch die nun verbaute Endstufe (21). Gleichzeitig wird durch die beschriebene Verdrahtung die Logik der ABS-Elektronik (1) intern so eingestellt, daß der Achsmodulator (8) mit einer VAR-Regelung (siehe oben) betrieben wird.

Der oben für die Fig. 3 beschriebene Fehlerfall kann nun nicht mehr auftreten, da ein fälschlich angeschlossener Kabelbaum eines 4S/4M-Systems durch die Rückführungsleitungen (30) erkannt wird und zu einer Fehlermeldung führt. Dies gilt auch dann, wenn wie oben beschrieben der Anschlußstecker des Modulators (17) nicht gesteckt ist, da in diesem Fall der Anschluß (25) der Endstufe (20) nicht frei wäre, sondern am Auslaßventil des Modulators (11) liegen würde (vergl. Fig.2).

Die oben beschriebene Vertauschung bzw. der fälschliche Einbau einer 4S/3M-Elektronik in ein 4S/4M-Fahrzeug würde daher nicht unerkannt bleiben.

Bei einem 4S/2M-ABS wären die beiden Modulatoren (18,19) der HA durch einen gemeinsamen Achsmodulator ersetzt, welcher entsprechend dem Achsmodulator (8) durch die beiden Endstufen (22,23) gemeinsam angesteuert würde.

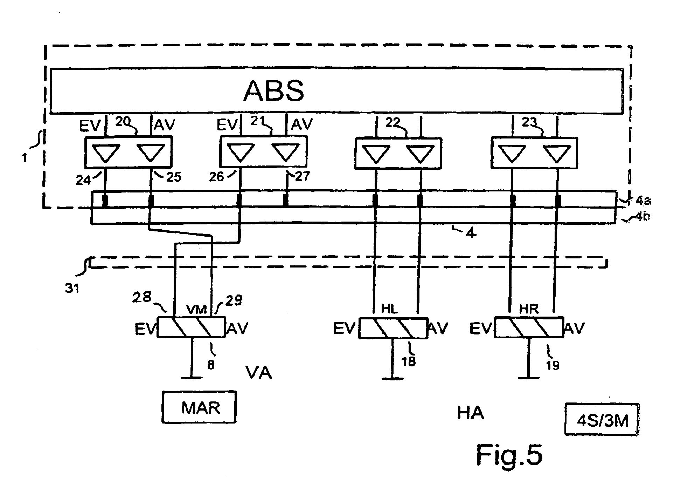

In der Fig. 5 ist das gleiche ABS-System wie in der Fig. 4 dargestellt, nur daß hier der Kabelbaum (31) so mit dem Stecker (4b) verdrahtet ist, daß der Achsmodulator (8) mit seinem elektrischen Einlaßventil-Anschluß (28) an den Einlaßventil-Ausgang (26) der Endstufe (21) des zweiten Kanals der Vorderachse (VA) angeschlossen ist, und daß der Achsmodulator (8) mit seinem elektrischen Ausgangsventil-Anschluß (29) an den Auslaßventil-Ausgang (25) der Endstufe (20) des ersten Kanals für die Vorderachse (VA) angeschlossen ist. Die Anschlüsse (24) der Endstufe (20) (EV) und (27) der Endstufe (21) (AV) bleiben frei.

Dieses Anschlußschema wird wiederum von der ABS-Elektronik (1) erkannt und die entsprechenden Endstufen (20, 21) werden so angesteuert, daß sich eine ordnungsgemäße Regelung für den Achsmodulator (8) ergibt, und zwar hier nach dem MAR-Regelprinzip (siehe oben). Die erfindungsgemäße Schaltung nach der Fig. 5 hat ebenfalls den Vorteil, daß die oben beschriebene Vertauschung nicht unerkannt bleibt.

Durch die vier vollständig verbauten Endstufen (20 bis 23) ist die erfindungsgemäße ABS-Elektronik (1) nicht nur für das gezeichnete 4S/3M-System, sondern auch für die Regelung von 4S/4M- und 4S/2M-Systemen geeignet, so daß keine unterschiedlichen Elektronik-Varianten gebaut werden brauchen.

## Patentansprüche

1. Antiblockiersystem (ABS) für ein zweiachsiges Radfahrzeug, insbesondere Nutzfahrzeug, mit einer mehrkanaligen ABS-Elektronik (1), mit vier Raddrehzahlsensoren (S) (5, 6, 15, 16) sowie mindestens einem Modulator (M) (8, 18, 19) pro Achse zum Einstellen von Bremsdrücken (4S/3M oder 4S/2M), wobei jeder Modulator jeweils ein Einlassventil (EV) und ein Auslassventil (AV) aufweist, wobei mindestens ein Modulator als Achsmodulator (8) zur gemeinsamen Druckversorgung zweier Räder (2, 3) einer Achse (14) ausgebildet ist, wobei diese Achse (14) eine Vorderachse (VA) oder eine Hinterachse (HA) sein kann, und wobei die elektrische Verbindung der Modulatoren (8, 18, 19) zur ABS-Elektronik (1) über einen Kabelbaum (31) und eine Steckverbindung (4) erfolgt, die aus mindestens einem Stecker (4b) und einer Buchse (4a) besteht,
wobei die ABS-Elektronik (1) vierkanalig mit vier Endstufen (20 bis 23) aufgebaut ist, und der mindestens eine Achsmodulator (8) von den beiden zu dieser Achse (14) gehörenden Endstufen (20, 21) der ABS-Elektronik (1) gemeinsam angesteuert wird,
**dadurch gekennzeichnet, dass**
die ABS-Elektronik (1) über Rückführungsleitungen (30) die Belegung des Steckers (4b) den Achsmodulator (8) erkennt und sich aufgrund der Belegung automatisch auf eine zur Ansteuerung des Achsmodulators (8) geeignete spezielle Regelstrategie einstellt.

2. Antiblockiersystem nach Anspruch 1,
**gekennzeichnet durch** folgende Merkmale:
a) die Elektronik (1) ist vierkanalig aufgebaut und weist je eine Endstufe (20 bis 23) zur Ansteuerung der Modulatoren (8 ; 18, 19) auf, wobei jede Endstufe einen Verstärker für das Einlaßventil (EV) und einen Verstärker für das Auslaßventil (AV) aufweist;
b) der Stecker (4b) der Steckverbindung (4) ist so mit dem Kabelbaum (31) verdrahtet, daß der Achsmodulator (8) mit seinem elektrischen Einlaßventil-Anschluß (28) an den Einlaßventil-Ausgang (24) der Endstufe (20) des ersten Kanals für die Achse (14) angeschlossen ist;
c) der Achsmodulator (8) ist mit seinem elektrischen Auslaßventil-Anschluß (29) an den Auslaßventil-Ausgang (27) der Endstufe (21) des zweiten Kanals für die Achse (14) angeschlossen (Fig. 4).

3. Antiblockiersystem nach Anspruch 2, **dadurch gekennzeichnet, daß** der Auslaßventil-Ausgang (25) der Endstufe (20) und der Einlaßventil-Ausgang (26) der Endstufe (21) frei bleiben.

4. Antiblockiersystem nach einem oder mehreren der Ansprüche 2 bis 3, **dadurch gekennzeichnet, daß** die Elektronik (1) über Rückführungsleitungen (30) aus der Belegung des Anschlußsteckers (4b) erkennt, ob ein gültiges Sensor-Modulator-System angeschlossen ist.

5. Antiblockiersystem nach einem oder mehreren der Ansprüche 2 bis 4, **dadurch gekennzeichnet, daß** sich die Elektronik (1) auf Grund der Belegung des Anschlußsteckers (4b) auf eine VAR-Regelung der Achse (14) programmiert (Fig. 4).

6. Antiblockiersystem nach Anspruch 1, **gekennzeichnet durch** folgende Merkmale
a) die Elektronik (1) ist vierkanalig aufgebaut und weist je eine Endstufe (20 bis 23) zur Ansteuerung der Modulatoren (8; 18, 19) auf, wobei jede Endstufe einen Verstärker für das Einlaßventil (EV) und einen Verstärker für das Auslaßventil (AV) aufweist;
b) der Stecker (4b) ist so mit dem Kabelbaum (31) verdrahtet, daß der Achsmodulator (8) mit seinem elektrischen Einlaßventil-Anschluß (28) an den Einlaßventil-Ausgang (26) der Endstufe (21) des zweiten Kanals der Achse (14) angeschlossen ist;
c) der Achsmodulator (8) ist mit seinem elektrischen Ausgangsventil-Anschluß (29) an den Auslaßventil-Ausgang (25) der Endstufe (20) des ersten Kanals für die Achse (14) angeschlossen (Fig. 5).

7. Antiblockiersystem nach Anspruch 6, **dadurch gekennzeichnet, daß** der Einlaßventil-Ausgang (24) der Endstufe (20) und der Auslaßventil-Ausgang (27) der Endstufe (21) frei bleiben.

8. Antiblockiersystem nach einem oder mehreren der Ansprüche 6 bis 7, **dadurch gekennzeichnet, daß** die ABS-Elektronik (1) über Rückführungsleitungen (30) aus der Belegung des Anschlußsteckers (4b) erkennt, ob ein gültiges Sensor-Modulator-System angeschlossen ist.

9. Antiblockiersystem nach einem oder mehreren der Ansprüche 6 bis 8, **dadurch gekennzeichnet, daß** sich die ABS-Elektronik (1) auf Grund der Belegung des Anschlußsteckers (4b) auf eine MAR-Regelung der Achse (14) programmiert (Fig. 5).

10. Antiblockiersystem nach einem oder mehreren der Ansprüche 1 bis 9, **dadurch gekennzeichnet, daß** der jeweilige Status und/oder die Belegung der Ausgänge der Endstufen (20 bis 23) über die Rückführungsleitungen (30) von der ABS-Elektronik (1) abgefühlt wird und diese daraus sowie aus der Zahl der angeschlossenen Raddrehzahlsensoren die Konfiguration des jeweils angeschlossenen Systems erkennt.

11. Antiblockiersystem nach Anspruch 10, **dadurch gekennzeichnet, daß** die ABS-Elektronik (1) bei einem erkannten unzulässigen System eine Warnmeldung abgibt.

## Claims

1. Anti-lock braking system (ABS) for a two-axle wheeled vehicle, especially a utility vehicle, having a multi-channel ABS electronics unit (1), having four wheel speed sensors (S) (5, 6, 15, 16) and at least one modulator (M) (8, 18, 19) per axle for adjusting brake pressures (4S/3M or 4S/2M), each particular modulator having one inlet valve (EV) and one outlet valve (AV), at least one modulator being in the form of an axle modulator (8) for supplying pressure jointly to two wheels (2, 3) of an axle (14), which axle (14) can be a front axle (VA) or a rear axle (HA), and the modulators (8, 18, 19) being electrically connected to the ABS electronics unit (1) by way of a cable harness (31) and a plug-in connection (4) consisting of at least one plug (4b) and socket (4a), the ABS electronics unit (1) being of four-channel construction having four output stages (20 to 23), and the at least one axle modulator (8) being driven jointly by the two output stages (20, 21) of the ABS electronics unit (1) that belong to that axle (14),
**characterised in that**
the ABS electronics unit (1) recognises, by way of return lines (30), the occupancy of the plug (4b) and, on the basis of the occupancy, automatically adjusts itself to a specific regulation strategy suitable for driving the axle modulator (8).

2. Anti-lock braking system according to claim 1,
**characterised by** the following features:
a) the electronics unit (1) is of four-channel construction and has in each case an output stage (20 to 23) for driving the modulators (8; 18, 19), each output stage having an amplifier for the inlet valve (EV) and an amplifier for the outlet valve (AV);
b) the plug (4b) of the plug-in connection (4) is so wired up to the cable harness (31) that the electrical inlet valve connection (28) of the axle modulator (8) is connected to the inlet valve output (24) of the output stage (20) of the first channel for the axle (14);
c) the electrical outlet valve connection (29) of the axle modulator (8) is connected to the outlet valve output (27) of the output stage (21) of the second channel for the axle (14) (Fig. 4).

3. Anti-lock braking system according to claim 2, **characterised in that** the outlet valve output (25) of the output stage (20) and the inlet valve output (26) of the output stage (21) remain free.

4. Anti-lock braking system according to one or more of claims 2 to 3, **characterised in that** the electronics unit (1) recognises from the occupancy of the connection plug (4b) by way of return lines (30) whether a valid sensor-modulator system is connected.

5. Anti-lock braking system according to one or more of claims 2 to 4, **characterised in that** the electronics unit (1), on the basis of the occupancy of the connection plug (4b), programs itself to a VAR regulation of the axle (14) (Fig. 4).

6. Anti-lock braking system according to claim 1, **characterised by** the following features:
a) the electronics unit (1) is of four-channel construction and has in each case an output stage (20 to 23) for driving the modulators (8; 18, 19), each output stage having an amplifier for the inlet valve (EV) and an amplifier for the outlet valve (AV);
b) the plug (4b) is so wired up to the cable harness (31) that the electrical inlet valve connection (28) of the axle modulator (8) is connected to the inlet valve output (26) of the output stage (21) of the second channel for the axle (14);
c) the electrical outlet valve connection (29) of the axle modulator (8) is connected to the outlet valve output (25) of the output stage (20) of the first channel for the axle (14) (Fig. 5).

7. Anti-lock braking system according to claim 6, **characterised in that** the inlet valve output (24) of the output stage (20) and the outlet valve output (27) of the output stage (21) remain free.

8. Anti-lock braking system according to one or more of claims 6 to 7, **characterised in that** the ABS electronics unit (1) recognises from the occupancy of the connection plug (4b) by way of return lines (30) whether a valid sensor-modulator system is connected.

9. Anti-lock braking system according to one or more of claims 6 to 8, **characterised in that** the ABS electronics unit (1), on the basis of the occupancy of the connection plug (4b), programs itself to a MAR regulation of the axle (14) (Fig. 5).

10. Anti-lock braking system according to one or more of claims 1 to 9, **characterised in that** the ABS electronics unit (1) senses, by way of the return lines (30), the particular status and/or the occupancy of the outputs of the output stages (20 to 23) and recognises therefrom and from the number of connected wheel speed sensors the configuration of the particular connected system.

11. Anti-lock braking system according to claim 10, **characterised in that,** when an impermissible system is recognised, the ABS electronics unit (1) issues a warning signal.

## Revendications

1. Système d'antiblocage (ABS) pour un véhicule pourvu de roues à deux essieux et notamment un véhicule utilitaire, comportant un système électronique ABS (1) à plusieurs canaux, quatre capteurs (S) de vitesse de rotation de roues (S) (5, 6, 15, 16) ainsi qu'au moins un modulateur (M) (8, 18, 19) sur chaque essieu pour le réglage de pressions de freinage (4S/3M ou 4S/2M), dans lequel chaque modulateur comporte respectivement une soupape d'entrée (EV) et une soupape de sortie (AV), dans lequel au moins un modulateur est agencé sous la forme d'un modulateur d'essieu (8) pour l'alimentation commune en pression des deux roues (2, 3) d'un essieu (14), dans lequel cet essieu (14) peut être un essieu avant (VA) ou un essieu arrière (HA), et dans lequel la liaison électrique des modulateurs (8, 18, 19) avec le système électronique ABS (1) a lieu par le biais d'un faisceau de câbles (31) et d'un connecteur (4), qui est constitué par au moins une fiche mâle (4b) et une douille (4a), où
le système électronique ABS (1) est agencé à canaux multiples avec quatre étages finals (20 à 23) et au moins le modulateur d'essieu (8) est commandé en commun par les deux étages finals (20, 21), qui sont associés à cet essieu (14) du système électronique ABS (1), le système électronique ABS (1) identifie l'occupation de la fiche (4b) par l'intermédiaire de lignes de renvoi (30) et, sur la base de l'occupation, se règle automatiquement sur une stratégie de régulation spéciale appropriée à la commande du modulateur d'essieu (8).

2. Système d'antiblocage selon la revendication 1, **caractérisé par** les caractéristiques suivantes:
a) le système électronique (1) est agencé à quatre canaux et comporte respectivement un étage final (20 à 23) pour commander les modulateurs (8 ; 18, 19), chaque étage final comportant un amplificateur pour la soupape d'entrée (EV) et un amplificateur pour la soupape de sortie (AV) ;
b) la fiche (4b) du connecteur (4) est câblée avec le faisceau de câbles (31) de telle sorte que le modulateur d'essieu (8) est raccordé avec sa borne électrique (28) de la soupape d'entrée à la sortie (24) de la soupape d'entrée de l'étage final (20) du premier canal pour l'essieu (14);
c) le modulateur d'essieu (8) est raccordé par sa borne électrique (29) de la soupape de sortie à la sortie (27) de la soupape de sortie de l'étage final (21) du second canal pour l'essieu (14) (figure 4).

3. Système d'antiblocage selon la revendication 2, **caractérisé en ce que** la sortie (25) de la soupape de sortie de l'étage final (20) et la sortie (26) de la soupape d'entrée de l'étage final (21) restent libres.

4. Système d'antiblocage selon une ou plusieurs des revendications 2 à 3, **caractérisé en ce que** le système électronique (1) identifie par l'intermédiaire de lignes de renvoi (30), à partir de l'occupation de la fiche de raccordement (4b), si un système valable de modulateur à capteurs est raccordé.

5. Système d'antiblocage selon une ou plusieurs des revendications 2 à 4, **caractérisé en ce que** le système électronique (1) se programme sur la base de l'occupation de la fiche de raccordement (4b) sur un système de régulation VAR de l'essieu (14) (figure 4).

6. Système d'antiblocage selon la revendication 1, **caractérisé par** les caractéristiques suivantes:
a) le système électronique (1) est agencé à quatre canaux et comporte respectivement un étage final (20 à 23) pour commander les modulateurs (8 ; 18, 19), chaque étage final comportant un amplificateur pour la soupape d'entrée (EV) et un amplificateur pour la soupape de sortie (AV) ;
b) la fiche (4b) est câblée avec le faisceau de câbles (31) de telle sorte que le modulateur d'essieu (8) est raccordé par sa borne électrique (28) de la soupape d'entrée à la sortie (26) de la soupape d'entrée de l'étage final (21) du second canal de l'essieu (14) ;
c) le modulateur d'essieu (8) est raccordé par sa borne électrique (29) de la soupape de sortie à la sortie (25) de la soupape de sortie de l'étage final (20) du premier canal pour l'essieu (14) (figure 5).

7. Système d'antiblocage selon la revendication 6, **caractérisé en ce que** la sortie (24) de la soupape d'entrée de l'étage final (20) et la sortie (27) de la soupape de sortie de l'étage final (21) restent libres.

8. Système d'antiblocage selon une ou plusieurs des revendications 6 à 7, **caractérisé en ce que** le système électronique ABS (1) identifie au moyen de lignes de renvoi (30), à partir de l'occupation de la fiche de raccordement (4b), si un système valable de modulateur à capteurs est raccordé.

9. Système d'antiblocage selon une ou plusieurs des revendications 6 à 8, **caractérisé en ce que** le système électronique ABS (1) se programme, sur la base de l'occupation de la fiche de raccordement (4b), sur une unité de régulation MAR de l'essieu (14) (figure 5).

10. Système d'antiblocage selon une ou plusieurs des revendications 1 à 9, **caractérisé en ce que** l'état respectif et/ou l'occupation des sorties des étages finals (20 à 23) est détecté par le système électronique ABS (1) par l'intermédiaire des lignes de renvoi (30) et ce système électronique identifie, à partir de là et à partir du nombre des capteurs de vitesses de roues raccordés, la configuration du système respectivement raccordé.

11. Système d'antiblocage selon la revendication 10, **caractérisé en ce que** le système électronique ABS (1) délivre une signalisation d'avertissement dans le cas d'un système non autorisé identifié.
